# EUROPÄISCHE PATENTANMELDUNG

(11) **EP 0 708 064 A2**
(43) Veröffentlichungstag der Anmeldung: **24.04.1996**
(21) Anmeldenummer: 95116312.0
(22) Anmeldetag: 17.10.1995
(51) Int. Cl.: C04B 35/01

(54) **Verfahren zur Herstellung von feuerfesten kohlenstoffgebundenen Steinen auf Basis von Magnesiumoxid**

(30) Priorität: 19.10.1994 DE 4437308
(71) Anmelder: Dolomitwerke GmbH, D-42489 Wülfrath (DE)
(72) Erfinder: Prange, Rainer, Dr. Ing., D-58097 Hagen (DE); Hüttinger, Klaus-J., Prof. Dr. Ing., D-76227 Karlsruhe (DE); Vincon, Achim, Dr., D-58099 Hagen (DE)

(57) **Zusammenfassung**

Als Bindepech für feuerfeste Steine werden bisher Steinkohlenteerpeche und thermisch härtende Harze eingesetzt. Geringe Koksausbeute beziehungsweise höhere Oxidationsanfälligkeit begrenzen die Haltbarkeit beim Einsatz in metallurgischen Gefäßen. Unerwünscht ist auch ein umweltgefährdender und gesundheitsschädlicher Gehalt an polyaromatischen Kohlenwasserstoffen. Beim neuen Verfahren zur Herstellung von kohlenstoffgebundenen feuerfesten Steinen soll ein thermoplastisches Bindemittel mit verbesserter Koksausbeute und möglichst niedrigem Benzo[a]pyren-Gehalt eingesetzt werden, um dadurch Steine mit verbesserter Festigkeit und Beständigkeit gegen chemischen Angriff zu erhalten.

Als Bindepech wird mesogenes Pech oder Polyaromaten-Mesophase oder Mesophasenpech eingesetzt. Herausragende Eigenschaft von Mesophasenpechen ist eine besonders günstige Korrelation von Koksausbeute und Erweichungsverhalten.

Mit den Steinen werden metallurgische Gefäße zum Aufnehmen von Stahlschmelze wie Lichtbogenöfen, Konverter oder Pfannen ausgekleidet.

## Beschreibung

Die Erfindung betrifft ein Verfahren zur Herstellung feuerfester kohlenstoffgebundener Steine auf Basis von Magnesiumoxid für feuerfeste Auskleidungen von metallurgischen Gefäßen.

Für die Zustellung von metallurgischen Gefäßen zum Aufnehmen von Stahlschmelze, wie Lichtbogenöfen, Konverter, Pfannen werden kohlenstoffgebundene Steine, insbesondere bei erhöhten Anforderungen an Festigkeit und chemische Beständigkeit verwendet. Bei besonders hohen Anforderungen bis zu Temperaturen von 1800 °C und chemischem Angriff durch aggressive Schlacken wird hochwertiges feuerfestes Material auf Basis von Magnesiumoxid bevorzugt.

Besonders gut geeignet sind hochreine und hochdichte Magnesiumoxid-Sinterprodukte mit einem Massenanteil an Magnesiumoxid (MgO) von > 96 % und Kornrohdichten von > 3,40 g·cm⁻³. Auch durch Schmelzen erzeugtes Magnesiumoxid findet für höchste Ansprüche Verwendung. Der höhere Preis wird durch längere Standzeiten ausgeglichen.

Als Bindephase kann Kohlenstoff verwendet werden, der durch Pyrolyse organischer Ausgangsverbindungen erzeugt wird. Dazu wird üblicherweise das feuerfeste Grundmaterial mit verkokbaren Bindemitteln, wie thermoplastischen Steinkohlenteerpechen oder Harzen, insbesondere Phenolharzen gemischt. Zur Erhöhung des Kohlenstoffgehaltes kann auch Graphit und/oder Ruß zugesetzt werden. Außerdem werden Zusatzstoffe zugesetzt zur besseren Mischbarkeit sowie Preßhilfsmittel. Weiterhin können üblicherweise Zusätze zur Erhöhung der Koksausbeute und ggf. Antioxidantien zur Vermeidung von Kohlenstoffabbrand beim Einsatz der fertigen Steine zugegeben werden. Nach der Formgebung durch Pressen werden die sogenannten _{"}grünen Steine" einer Karbonisierung bis etwa 1000 °C zur Konvertierung des Peches im Bindekoks unterzogen. Die Bedeutung des Kohlenstoffs liegt in der Behinderung der Schlackeninfiltration in die feuerfesten Steine. Kohlenstoff wird von flüssiger Schlacke, die hauptsächlich aus Silikaten besteht, schlecht benetzt. Er kann zudem schmelzpunkterniedrigende Oxide wie Fe₂O₃ reduzieren, wobei im Stein ein Gaspolster aus Kohlenmonoxid gebildet wird.

Es ist auch möglich, die grünen Steine direkt zur Ausmauerung von metallurgischen Gefäßen zu benutzen. Die Pyrolyse des Binders erfolgt in diesem Fall beim ersten Aufheizen des Gefäßes. Dabei ist es jedoch nachteilig, daß flüchtige polyaromatische Kohlenwasserstoffe freigesetzt werden, die zum Teil gesundheitsgefährdend sind. Außerdem kann infolge der Thermoplastizität des Pechbinders die Ausmauerung in sich zusammensinken. Daher werden üblicherweise die Steine vor dem Einbau bei Temperaturen zwischen 300 und 500 °C wärmebehandelt (Temperung).

Der Nachteil von thermisch härtenden Harzen als Bindemittel ist nicht nur der verhältnismäßig hohe Preis, sondern auch ihre Eigenschaft, daß die aus der Pyrolyse bzw. Karbonisierung der dreidimensional vernetzten Harze hervorgehenden Kokse absolut isotrop, nicht graphitierbar und in der Regel oxidationsanfälliger als Kokse aus konventionellen Bindepechen sind und damit schnellerem Verschleiß unterliegen.

Ein Nachteil der Steinkohlenteerpeche als Bindemittel für feuerfeste Steine ist die geringe Koksausbeute von nur etwa 50 %. Unerwünscht ist insbesondere der umweltgefährdende und gesundheitsschädliche Gehalt an polyaromatischen Kohlenwasserstoffen wie Benzo[a]pyren.

Der Erfindung liegt daher die Aufgabe zugrunde, bei einem Verfahren zur Herstellung von kohlenstoffgebundenen feuerfesten Steinen ein thermoplastisches Bindemittel mit verbesserter Koksausbeute und möglichst niedrigem Benzo[a]pyren-Gehalt zur Verfügung zu stellen und dadurch Steine mit verbesserter Festigkeit und Beständigkeit gegen chemischen Angriff zu erhalten.

Die Aufgabe wird dadurch gelöst, daß als Bindepech mesogenes Pech oder Polyaromaten-Mesophase oder Mesophasenpech eingesetzt wird. Herausragende Eigenschaft von Mesophasenpechen ist eine besonders günstige Korrelation von Koksausbeute und Erweichungsverhalten.

Mesophasenpech bezeichnet Peche mit unterschiedlichen Gehalten an Polyaromaten-Mesophase. Mesogenes Pech bedeutet hierbei ein isotropes Pech, das bei jeder Art von geeigneter Behandlung unmittelbar Mesophase bilden kann. Ein übliches isotropes Bindepech ist nicht in der Lage, unmittelbar Mesophase zu bilden. Polyaromaten-Mesophasenpeche sind demzufolge zweiphasige Materialien. Sie bestehen aus einer isotropen Pechphase mit anisotroper Polyaromaten-Mesophase. Besonders geeignet als Bindephase sind Mesophasenpeche, bei denen der Mesophasengehalt 50 % nicht übersteigt. Bis zu solchen Gehalten ist die Polyaromaten-Mesophase in Form von kleinen Sphärolithen mit etwa 10 µm Durchmesser im isotropen mesogenen Pech dispergiert.

Die Polyaromaten-Mesophase selbst kann ebenfalls als thermoplastische Bindephase für feuerfeste Steine eingesetzt werden.

Bevorzugt wird ein durch Temperaturbehandlung von Pech erhaltenes Mesophasenpech eingesetzt. Im Gegensatz zu katalytisch hergestellten mesophasenhaltigen Produkten fällt die durch die Karbonisierung bedingte Volumenausdehnung bei den erfindungsgemäßen thermisch hergestellten Mesophasenpechen besonders günstig aus. Sie liegt deutlich unter 1 %.

Polyaromaten-Mesophasen haben grundsätzlich geringere Gehalte an Benzo[a]pyren als Steinkohlenteerbindepeche. Als Bindemittel für feuerfeste Steine werden Mesophasenpeche bevorzugt, die aus Petrolpech erhalten werden, da so der Gehalt an Benzo[a]pyren besonders niedrig gehalten werden kann.

Durch Einsatz von Mesophasenpech kann auf die Additive Ruß, Graphit und insbesondere Schwefel, der zur Verbesserung der Koksausbeute bei Steinkohlenteerpechen zugesezt wird und aus Umweltschutzgründen problematisch ist, verzichtet werden.

Zur weiteren Erläuterung der Erfindung werden in der folgenden Tabelle an Probekörpern erhaltene Eigenschaftswerte für feuerfeste kohlenstoffgebundene Steine nach Stand der Technik und nach der Erfindung zusammengestellt.

| Eigenschaften | Beispiel nach Stand der Technik | Beispiel nach der Erfindung |
|---|---|---|
| Bindemittel | Steinkohlenteerpech | Mesophasenpech |
| Rohdichte | 3,065 g·cm⁻³ | 3,065 g·cm⁻³ |
| Bindemittelgehalt (grüne Formkörper) | 6 % | 6 % |
| Koksausbeute | 53 % | 72 % |
| Kohlenstoffgehalt (nach Karbonisierung) | 3,0 % | 4,5 % |
| Kaltdruckfestigkeit | 45 MPa | 80 MPa |

Behandelt man die grünen Körper in Sauerstoffatmosphäre und insbesondere bei erhöhtem Sauerstoffdruck, kann bei Einsatz von Mesophasenpechen eine Koksausbeute von 80 % und ein Kohlenstoffgehalt im gebrannten Körper von 5 % erreicht werden. Die optimale Stabilisierungstemperatur beträgt nur etwa 165 °C bei relativ kurzen Zeiten. Eine solche Stabilisierungsbehandlung in einer Atmosphäre mit einem Volumenanteil an Sauerstoff > 21 % ist auch im Falle von üblichen Steinkohlenteerpechen wirksam und kann das bisher übliche Tempern der Steine ersetzen.

Die feuerfesten Körper nach der Erfindung wurden bei einem Preßdruck von 200 MPa und bei einer Preßtemperatur von 300 °C hergestellt. Die Karbonisierung der Körper erfolgte mit einer Aufheizgeschwindigkeit von 0,2 K·min⁻¹ bis 600 °C und mit 1 K·min⁻¹ von 600 auf 1000 °C. Die Endtemperatur von 1000 °C wurde eine Stunde gehalten. Die Volumenausdehnung infolge der Karbonisierung lag deutlich unter 1 %. Die Koksausbeuten sind bindemittelspezifisch, das heißt von Kornzusammensetzung, Preßdruck und Preßtemperatur nahezu unabhängig.

## Patentansprüche

1. Verfahren zur Herstellung von kohlenstoffgebundenen feuerfesten Steinen aus feuerfestem Grundmaterial mit Bindepech, das durch Pyrolyse verkokt wird, dadurch gekennzeichnet, daß als Bindepech mesogenes Pech oder Polyaromaten-Mesophase oder Mesophasenpech eingesetzt wird.

2. Verfahren nach Anspruch 1, dadurch gekennzeichnet, daß ein durch Temperaturbehandlung von Pech erhaltenes Mesophasenpech eingesetzt wird.

3. Verfahren nach Anspruch 2, dadurch gekennzeichnet, daß ein aus Petrolpech hergestelltes Mesophasenpech eingesetzt wird.

4. Verfahren nach einem der Ansprüche 1 bis 3, dadurch gekennzeichnet, daß die feuerfesten Steine vor dem Verkoken des Bindepechs in einer Atmosphäre mit einem Volumenanteil an Sauerstoff > 21 % behandelt werden.
